# EUROPEAN PATENT SPECIFICATION

(11) **EP 4 416 048 B1**
(45) Date of publication and mention of the grant of the patent: **19.11.2025**
(21) Application number: 22790383.8
(22) Date of filing: 13.10.2022
(51) Int. Cl.: B63B 35/03, F16L 1/23

(54) **ELONGATED BODY TENSIONER FOR PULLING AT LEAST TWO ELONGATED BODIES ALONG IN A DIRECTION OF MOVEMENT**
LANGKÖRPERSPANNER ZUM ZIEHEN VON MINDESTENS ZWEI LÄNGSKÖRPERN IN BEWEGUNGSRICHTUNG
TENDEUR DE CORPS ALLONGÉ POUR TIRER DEUX CORPS ALLONGÉS OU PLUS LE LONG D'UNE DIRECTION DE DÉPLACEMENT

(30) Priority: 14.10.2021 NL 2029401
(43) Date of publication of application: 21.08.2024
(73) Proprietor: DEME Offshore NL B.V., 4817 ZG Breda (NL)
(72) Inventor: GREMMEN, Marco Martinus Maria, 5351 PD Berghem (NL); VISSER, Maarten, 4791 JE Klundert (NL)
(74) Representative: Arnold & Siedsma
(86) International application number: PCT/NL2022/050586
(87) International publication number: WO 2023/063826

(56) References cited:
- EP-A2- 0 125 612
- WO-A1-2011/115500
- WO-A1-2012/071666
- WO-A1-93/06401
- WO-A1-96/30686
- DE-A1- 102019 106 362
- GB-A- 2 591 771
- US-A- 4 112 730
- US-B1- 6 516 891

## Description

### TECHNICAL FIELD

The present application relates to an elongated body tensioner configured to pull at least two elongated bodies along simultaneously in a direction of movement. The application further relates to an elongated body tensioner contact pad for use in such an elongated body tensioner, an elongated body laying system comprising such an elongated body tensioner, and a vessel comprising such an elongated body laying system. The application furthermore relates to a method for laying elongated bodies using an elongated body tensioner according to the invention.

The elongated body tensioner may be used for pulling a variety of elongated bodies, such as cables, for instance electrical and optical cables, and pipes, for instance pipes for underwater transport. The present invention may also be used for other purposes than laying elongated bodies under water, including on-shore purposes. It is for instance possible to use tensioners according to the invention in elongated body manufacturing locations, or (industrial) mining operations. It is also possible to use the invention in the context of pipelay, i.e. in the context of laying pipes on a seabed.

### BACKGROUND

In the field of elongated body laying, elongated body tensioners are generally known means in which an elongated body is squeezed in between a pair of elongated body tensioner contact pads. They are for example included in elongated body laying systems and/or vessels, in which they retrieve an elongated body from storage, direct the elongated body towards a chute (via which the elongated body is guided overboard) and/or hold remaining elongated body in place when another part of said elongated body has already left the elongated body laying system and/or vessel.

When pulling an elongated body along, undesired movement of the elongated body in the direction of movement (also referred to as slipping), and/or a direction transverse thereto should be avoided at all cost. Elongated bodies can slip temporarily, in which case the slipping elongated body jerks forward (or backwards), or elongated bodies can slip continuously, resulting in a runaway elongated body. For an elongated body tensioner to operate well, the pressure provided by the elongated body tensioner is preferably distributed uniformly over the elongated body.

In some specific applications, for example when laying DC cables, it is sometimes preferred to lay cables in bundles of two. To ensure that slipping is prevented, when laying a bundle of two elongated bodies, the state of the art elongated body laying system uses two elongated body tensioners arranged next to each other, and each elongated body is held by its respective elongated body tensioner. After passing through these respective elongated body tensioners, the elongated bodies are bundled by appropriate means. The use of one elongated body tensioner per elongated body ensures correct operation of the elongated body tensioner without slipping and the like.

Elongated body tensioners are substantial in both size and weight. They use up space and carrying capacity of elongated body laying systems and/or vessels. Having to use one elongated body tensioner per elongated body that has to be pulled along is inefficient.

Known from the art is the pipeline diverter apparatus disclosed in WO 9630686 A1. This apparatus is configured to divert a pipeline or other elongate member about an arcuate path, and comprises a plurality of roller track assemblies to tension said pipeline. Each roller track assembly may comprise two endless belts provided with pipeline support pads.

Also known from the art are the pipe tensioners disclosed in EP 0125612 A2. Said document discloses two coaxially aligned pipe tensioners to independently tension separate pipes, while alternatively allowing the pipe-laying barge to also lay a large single pipe which would be tensioned by both pipe tensioners.

Also known from the art are the means for continuous motorized feeding or advancement of the respective pipes and power cables disclosed in WO 2011 115500 A1. Said document discloses that these means may typically be in the form of a plurality of caterpillar tracks acting directly against the surface of the pipe, alternatively also against the cable.

Also known from the art are the track-type tensioners as disclosed in GB 2591771 A. These comprise pads, which in turn comprise an interface made up of a plurality of rigid elements that together define a contact face of the pad, for gripping a pipeline or other elongated product supported by the tensioner in use. Other examples of known tensioners can be found in WO 2012/071666 A1, US 6 516 891 B1 or DE 10 2019 106362 A1.

It is an object of the present invention therefore to provide an elongated body tensioner that can reliably pull along at least two elongated bodies simultaneously in a direction of movement.

### SUMMARY OF THE INVENTION

The invention provides a device in accordance with claim 1. The elongated body tensioner configured to pull at least two elongated bodies along in a direction of movement, in particular comprises a first track comprising a plurality of first contact pads, arranged in a row in the direction of movement; a second track comprising a plurality of second contact pads, arranged in a row in the direction of movement; wherein the first and second track are mutually arranged such that the at least two elongated bodies can be squeezed in between one or more pairs of one first contact pad and one second contact pad; wherein, in a pair, one of the first and the second contact pad is configured to receive the at least two elongated bodies which are, on the pad, positioned next to each other in a direction transverse to the direction of movement; and, wherein, in a pair, the one, and/or another of the first and the second contact pad is configured to accommodate a possible difference in diameter of the at least two elongated bodies to avoid reducing contact force between the at least two elongated bodies and the contact pads.

It has turned out that, when squeezing at least two elongated bodies in an elongated body tensioner known from the art, unequal distribution of pressure over the squeezed elongated bodies may be caused by a difference in diameter between the squeezed elongated bodies. These differences can occur due to manufacturing tolerances but also due to other reasons. Consequently, pressure might be poorly distributed, up to the point that only one elongated body is squeezed and the other elongated body can move freely. Therefore, the invented elongated body tensioner, accommodating a possible difference in diameter of the at least two elongated bodies, makes it safe to pull along at least two elongated bodies with one elongated body tensioner, even when guiding elongated bodies with unequal diameters.

According to the invention, the first and second track are mutually arranged such that the at least two elongated bodies can be squeezed in between one or more pairs of one first contact pad and one second contact pad. The at least two elongated bodies are preferably squeezed in between the pads by each being in direct contact with said pads. In an embodiment, the possible difference in diameter of the at least two elongated bodies is accommodated by providing the accommodating contact pad with a contact surface manufactured of a resilient material. This allows for the larger of the two elongated bodies to compress the contact surface locally without moving the contact pads forming a squeezing part apart.

According to the invention, the possible difference in diameter of the at least two elongated bodies is accommodated by providing the accommodating contact pad on its respective track such that it can be tilted around an axis parallel to the direction of movement and/or such that it can be tilted in the transverse direction, to adjust to a difference in diameter of the at least two elongated bodies. This embodiment is particularly advantageous because when, at the position of the larger of the two elongated bodies, the accommodating contact pad is pushed away from the contact pad it forms a pair with, due to the accommodating contact pad tilting around the axis, the accommodating pad is naturally pushes against the smaller of the two elongated bodies.

Such embodiments can for example be implemented by providing an accommodating contact pad comprising a base plate, a cushion arranged on a first side of the base plate, a mounting element configured to be mounted on the first or second track, and a flexible element via which the mounting element is tiltably attached to a second side of the base plate, opposite to the first side. More specifically, this flexible element may be made from any flexible material, such as a rubber for instance. A preferred rubber comprises a polyurethane (PU) rubber, but other rubbers, such as natural rubber, may also be used. The flexible element may comprise a hinge, formed by two plates and the flexible material arranged in between the two plates. The flexible element may also comprise a pinned hinge, and/or one or more springs.

In an embodiment, the at least two elongated bodies are received next to each other in the transverse direction by providing the receiving contact pad with, for each elongated body, at least one elongated recess extending in the direction of movement. Such recesses prevent the elongated bodies from moving in this transverse direction.

The transverse direction is a direction that is both perpendicular to the direction of movement, and perpendicular to the direction in which the first and/or second tracks are provided. The transverse direction may also be perpendicular to the direction in which the at least two elongated bodies are squeezed. The transverse direction may extend in a horizontal direction in an embodiment wherein the direction of movement is also horizontal, and first and second tracks are provided in a vertical plane. The two elongated bodies then run next to each other in the horizontal plane. Alternatively, the transverse direction may extend in a vertical direction, when direction of movement is horizontal, and first and second tracks are provided in a horizontal plane. The two elongated bodies is this embodiment run one above each other, i.e. in the vertical plane. It is also possible to position the first and second tracks in a tilted plane at a non-zero angle to the horizontal plane. In this embodiment, the transverse direction also extends in a tilted plane.

In an embodiment, when squeezed in between the one or more pairs of one first and one second contact pads, the at least two elongated bodies extend in the direction of movement. Such a configuration ensures maximum displacement of the elongated bodies in the direction that they extend when pulling along said elongated body in the direction of movement, thereby loading, retrieving, and or laying an elongated body efficiently.

In an embodiment, the direction of movement is substantially horizontal and wherein the first track is an upper track and wherein the second track is a lower track. Elongated bodies can be supported from below in a naturally simple manner, i.e. by partially relying on gravity for the elongated bodies to stay in place. In another embodiment, the direction of movement is substantially vertical and the first track is a left track and the second track is a right track, or vice versa. It is also possible that the direction of movement is provided at a non-zero angle to the horizontal direction or plane.

Each contact pad may be provided with a cushion, for instance made from a resilient material and adapted to locally compress when a sufficiently strong pushing force is effected thereon. It is also possible to use metal serrated track pads, i.e. contact pads that are provided with metal serrations. This is for instance useful when the elongated bodies comprise pipes in pipe laying operations. elongated body

In some embodiments, the elongated body tensioner comprises a plurality of receiving contact pads and these are preferably all mounted on the same track. Similarly, in some embodiments the elongated body tensioner comprises a plurality of accommodating contact pads and these are preferably all mounted on the same track. This allows for forming pairs of contact pads comprising either and preferably both these two types of contact pads more often.

In those embodiments thereof in which the direction of movement is also substantially horizontal as discussed earlier, all receiving contact pads are mounted on the lower track, and are, when forming part of a pair of contact pads squeezing the at least two elongated bodies in between, are preferably facing upward and/or all accommodating contact pads are mounted on the upper track, and, when forming part of a pair of contact pads squeezing the at least two elongated bodies in between, are preferably facing downward.

Accommodating difference in between the diameter of the at least two elongated bodies from above is more advantageous since whatever part of the accommodating contact pad is pushes away from the pad opposing it when receiving unequal elongated bodies, that part will naturally be pulled back down by gravity when the elongated bodies again become of equal of approximately equal thickness.

Receiving the at least two elongated bodies from above is more advantageous since gravity naturally contributes to for example friction between the at least two elongated bodies and the underlying receiving contact pad.

In an embodiment, in a single pair from the one or more pairs, one of the first and the second contact pad is the receiving contact pad and the other of the first and second contact pad is the accommodating contact pad and, wherein this is preferably the case for each of the pairs in the one or more pairs. The mentioned configuration is preferred as it assures a balance between accommodating and receiving the at least two elongated bodies.

However, in other embodiments, in a single pair from the one or more pairs, one of the first and the second contact pad can be both the receiving contact pad and the accommodating contact pad. Using such pads means that both accommodating and receiving the at least two elongated bodies can be provided without having to replace all contact pads in existing elongated body tensioners when upgrading them for pulling along at least two elongated bodies.

In an embodiment, the first and/or the second track are caterpillar tracks configured to displace the first and/or second contact pads in the direction of movement, and, by looping back on themselves, are further configured to displace the first and/or second contact pads in a direction opposite to the direction of movement.

The invention furthermore provides a elongated body tensioner contact pad configured to be mounted on a track of a elongated body tensioner according to any of the above embodiments.

In some embodiments, the contact pad comprises a elongated body contact surface manufactured of a resilient material. In some embodiments, the contact pad comprising a base plate, a cushion arranged on a first side of the base plate, a mounting element configured to be mounted on the track, and a flexible element via which the mounting element is attached to a second side of the base plate, opposite to the first side. The flexible element preferably comprises at least one of a hinge, formed by two plates and the flexible material arranged in between the two plates. The flexible element may also comprise a pinned hinge, and/or one or more springs.

Such contact pads can be mounted on track elements of tensioners tracks currently used for one elongated body and therefore such contact pads can used to upgrade existing elongated body tensioners to pull along at least two elongated bodies.

The invention furthermore provides a tensioning system for laying an assembly of at least two elongated bodies, comprising storage configured to have at least two elongated bodies stored therein; one or more elongated body tensioners according to any one of the earlier discussed embodiments, wherein each elongated body tensioner is configured to pull on one end of the at least two elongated bodies to remove part of the at least two elongated bodies from storage; means configured to bundle the parts of elongated body removed from storage positioned in an assembly, downstream of the elongated body tensioner; a chute, configured to guide the elongated body assembly overboard.

The invention furthermore provides an elongated body laying vessel, provided with a tensioning system as described directly above.

The invention furthermore provides for a method for laying an assembly of at least two elongated bodies from an elongated body laying vessel, preferably the elongated body laying vessel as described directly above, the method comprising storing, in a storage, the at least two elongated bodies, retrieving part of all of the at least two elongated bodies from storage by pulling, using an elongated body tensioner according to any one of the earlier discussed embodiments, on one end of the at least two elongated bodies, bundling the parts of the elongated body removed from storage in an assembly, downstream of the elongated body tensioner, and guiding, using a chute, the elongated body assembly overboard.

### DETAILED DESCRIPTION OF THE PREFERRED EMBODIMENTS

The invention will now be described in more detail by reference to the attached figures, and a cable laying embodiment. It is however explicitly mentioned that the invention is not limited to laying cables and the invention encompasses pulling along any other elongated flexible article in a direction of movement. Therein:
figure 1 schematically shows a perspective view of a cable laying vessel;
figure 2 schematically shows an isometric view of a cable tensioner according to an embodiment of the invention;
figure 3 schematically shows a front view of a cable tensioner according to an embodiment of the invention;
figures 4 and 5 both schematically show a cross-section of a pair of contact pads, configured and arranged to squeeze two cables;
figure 6 schematically shows a perspective view of an accommodating contact pad,
figure 7 schematically shows a perspective view of a receiving contact pad,
figures 8A and 8B schematically show a front view and a top down view of bundling means.

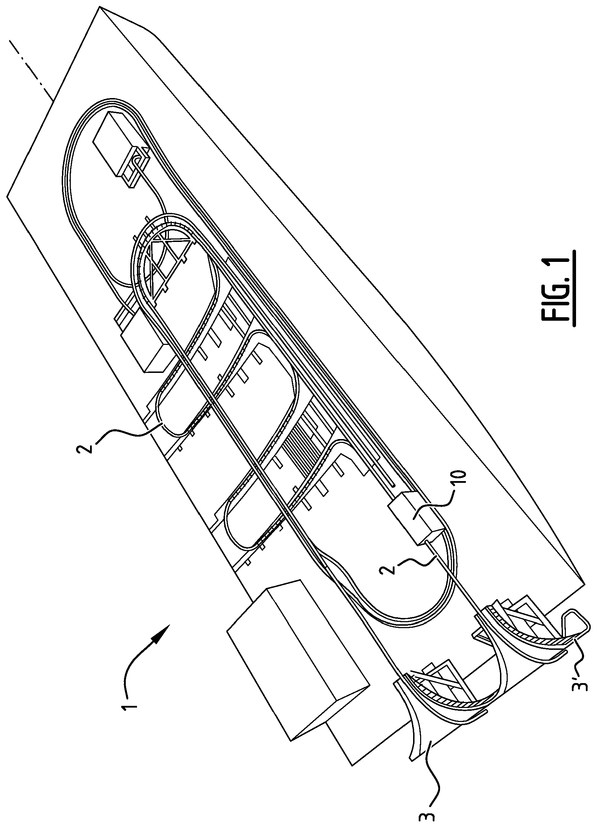

Referring to figure 1, a part of a vessel 1 for laying cables 2 on or in a sea bed is shown. The vessel 1 is at a rear side of the deck provided with a portside chute 3 and a starboard chute 3' for guiding a cable 2, for instance a data transmission cable. The chutes 3, 3' may be used to reel in the cable 2 from a suitable source, such as an onshore cable rack (not shown), but may also be used to bring out of board the cable 2 during a cable laying operation off shore. A cable tensioner 10 is present to pull the cable 2 along in a direction of movement. Specifically, the tensioner 10 may pull cable from and/or to a cable storage, such as one or more cable storage carrousels commonly arranged below deck (cable storage not shown). Additionally and/or alternatively, the tensioner 10 may, during a cable laying operation, prevent the cable 2 from running overboard freely.

The vessel 1 can generally be said to comprise a tensioning system for cable laying. Apart from the earlier mentioned storage, one or more cable tensioners and chutes, such a system and/or vessel may further comprise means configured to bundle parts of cable removed from storage. Such bundling means are preferably positioned downstream of the cable tensioner and up-stream of the mentioned chutes, relative to the direction of movement. Bundling two or more cables offers the advantage that only one bundled assembly of cables needs to be laid out during the process of cable laying. Bundling at least two cables exiting a cable tensioner according to the invention is additionally advantageous since no two separate cable tensioners are required and the cables can arrive substantially more parallel at the bundling means without additional means for directing the cables in between the cable tensioner and the bundling means.

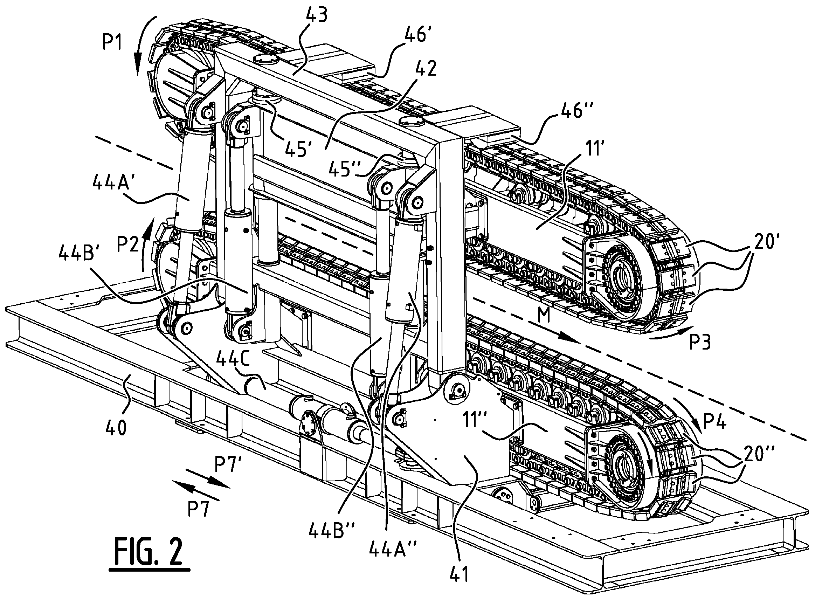

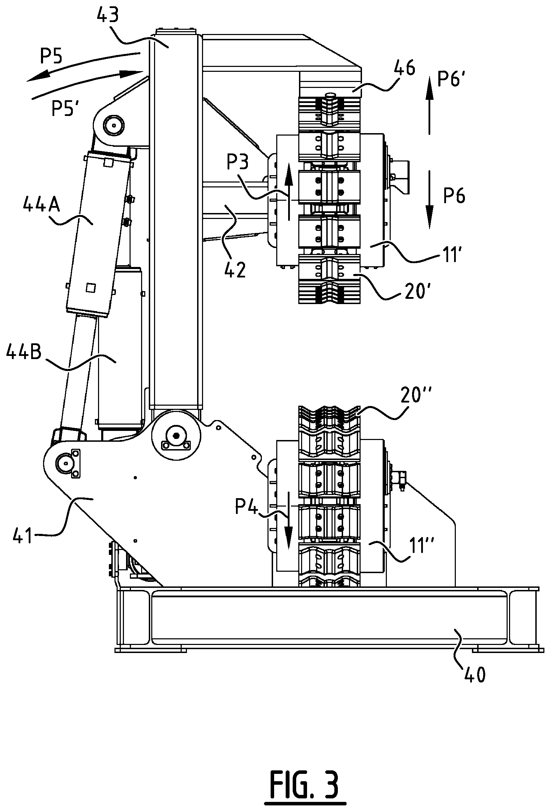

Referring to figures 2 and 3, a cable tensioner 10 according to an embodiment of the invention is shown.

Cable tensioner 10 comprises cable tensioner tracks 11, or, more specifically said, an upper cable tensioner track 11' and a lower cable tensioner track 11". The indication of 'upper' and 'lower' can be used for these tracks because these tracks are arranged one above the other in a vertical direction. The tracks may however also be arranged in a horizontal direction, or at a non-zero angle with the horizontal or vertical direction. Tracks 11 comprise a plurality of contact pads 20, or, more specifically said, in this embodiment upper track 11' comprises a plurality of first contact pads 20' and lower track 11" comprises a plurality of second contact pads 20".

Cable tensioner 10 is configured to pull two cables (not shown) in a direction of movement (M).,

Upper track 11' may move the first contact pads 20' mounted thereon, when seen from the isometric perspective shown in figure 2, in a counter-clockwise direction (CCW). Specifically, first contact pads 20' move from the top-left to bottom-right. Similarly, lower track 11" may move the second contact pads 20" mounted thereon, when seen from the same side, in a clockwise direction (CW). Specifically, second contact pads 20" will then also move from the top-left to the bottom-right.

Furthermore, tracks 11 may be aligned and/or synchronised such that each time that one of the first contact pads 20' revolves around a front end of upper track 11' (P1), one of the second contact pads 20" will revolve around a front end of lower track 11" (P2). Together these two contact pads then form a pair which, when facing each other, are configured to squeeze cables in between. The material from which the contact pads are made, in combination with this squeezing hold, facilitate the pair of contact pads, when moving from left to right as explained above, to pull the two cables along in the direction of movement (M). Eventually, the earlier described pair of one first contact pad 20' and one second contact pad 20" moves up to a rear end of their respective tracks 11', 11". By the counter-clockwise movement effected by upper track 11', a first contact pad 20' is eventually moved away from the second contact pad 20" at a rear end (P3). By the clockwise movement effected by lower track 11", a second contact pad 20" is eventually moved away from the first contact pad 20' at the rear end (P4). Both contact pads 20', 20" are returned to the front end of their respective track by the continuous movement of said tracks 11', 11".

Cable tensioner 10 further comprises base frame 40, on which a lower frame 41 is slidably mounted. In turn, to lower frame 41 is fixedly attached lower track 11" and on lower frame 41 is tiltably mounted a rectangular frame 43. In turn, to rectangular frame 43 is mounted upper frame 42, and to upper frame 42 is fixedly attached upper track 11.' Cable tensioner 10 further comprises a number of actuators 44A-C.

Specifically, from the pair of actuators 44A', 44A'', each is connected with one end to lower frame 41 and with another end to rectangular frame 43. Actuators 44A', 44A" are configured to tilt rectangular frame 43 with respect to lower frame 41 (P5, P5').

Specifically, from the pair of actuators 44B', 44B", each is connected with one end to rectangular frame 43 and with another end to upper frame 42. Actuators 44B', 44B" are configured to lift and/or lower upper frame 42 with respect to rectangular frame 43, as well as with respect to lower frame 41, in directions substantially vertical (P6, P6'). As lower track 11" is fixedly attached to lower frame 41 and upper track 11' is fixedly attached to upper frame 42, actuators 44B', 44B" can alternatively be said to be configured to lift and/or lower track 11' with respect to upper track 11'.

Specifically, actuator 44C is connected with one end to base frame 40 and with another end to lower frame 41. Actuator 44C is configured to slide lower frame 41 with respect to base frame 40 in directions parallel to the direction of movement (P7, P7').

The invention is not limited to this particular configuration. Other arrangements can be conceived. For example, cable tensioners are conceivable which pull cable at an angle, up to the point that cable is pulled vertically. Additionally, cable tensioners are conceivable in which tracks are not arranged completely above and/or below cable, but are arranged to contact the two cables 2 from opposing diagonal sides.

Additionally, cable tensioners are conceivable comprising more than two tensioning tracks. In an embodiment, upper track 11' may comprise two sub-tracks, arranged one in front of the other. In such an embodiment, the combined length of these sub-tracks would be approximately the same as that of lower track 11".

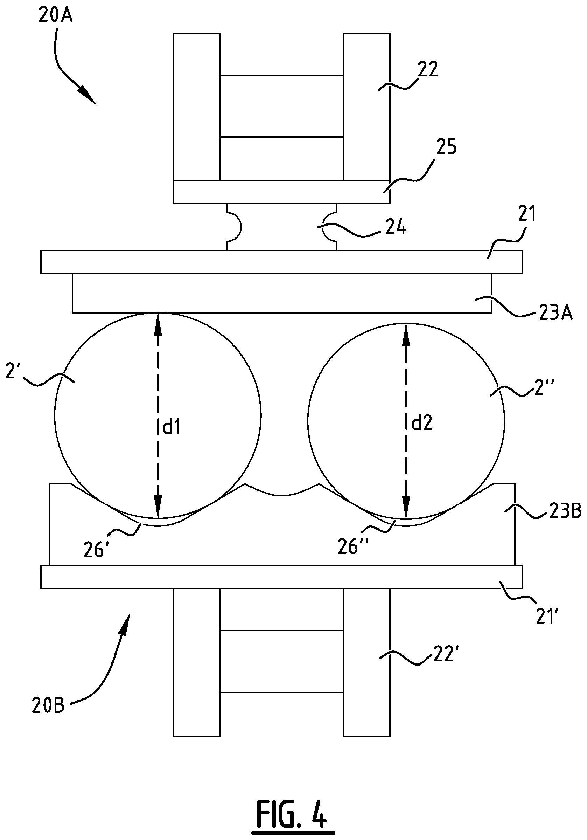

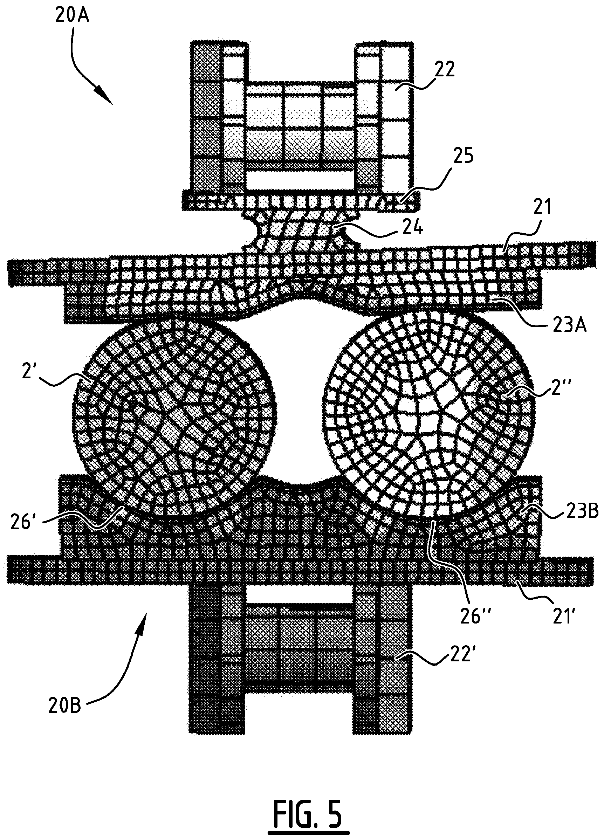

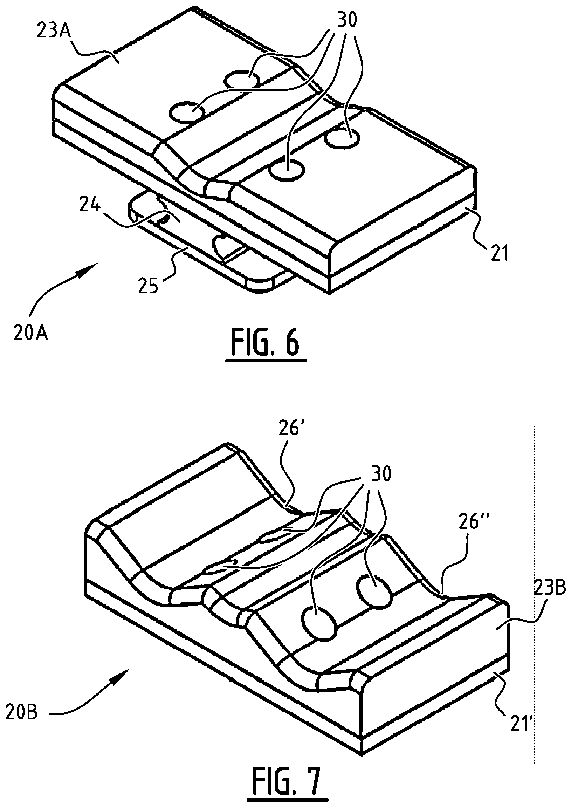

Referring to figures 4 and 5, a pair of one accommodating contact pad 20A and one receiving contact pad 20B, while squeezing two cables 2', 2", is shown. More specifically said, these figures show a cross-section in a plane perpendicular to the direction of movement. Perspective views of the accommodating contact pad 20A and receiving contact pad 20B are shown in figures 6 and 7 respectively. Either of these contact pads 20A, 20B can be mounted in tensioner 10, at the positions of any of the first and/or second contact pads 20', 20".

The embodiment of accommodating contact pad 20A shown comprises a substantially flat cushion 23A arranged on a first side of a base plate 21. Accommodating contact pad 20A furthermore comprises a mounting plate 25 configured to be mounted on an upper track element 22. Mounting plate 25 is attached to a second side of base plate 21, opposite to the first side, via a flexible hinge 24. Flexible hinge 24 may hinge around an axis parallel to the direction of movement M. In the shown embodiment, hinge 24 is arranged in between base plate 21 and mounting plate 25 with the hinging axis parallel to the direction of movement and/or extending in a direction perpendicular to the plane of the cross-section shown in figures 4 and 5.

The embodiment of receiving contact pad 20B shown comprises a cushion 23B provided with elongated recesses 26', 26" extending in a direction perpendicular to the plane of the cross-section that figures 4 and 5 show. Cushion 23B is attached to a first side of base plate 21' and receiving contact pad 20B is mounted on lower track element 22' via a second side of base plate 21', opposite of the first side.

As such contact pads 20A, 20B can be mounted on track elements 22, 22' that can be used to upgrade a cable tensioner to a cable tensioner configured to pull at least two cables along. The skilled person will appreciate that the contact pads can be adapted further to facilitate even more than two cables. For example by providing more elongated recesses.

As explained in the above, during a cable laying process, two or more cables are pulled along simultaneously by the cable tensioner 10 in the direction of movement M, naturally causing tension between the squeezed part of the two or more cables, and a part of these at least two cables situated upstream (i.e. cables that have yet to enter the cable tensioner). Furthermore, the at least tow cables are guided overboard, naturally causing tension between s part of the at least two cables downstream (i.e. cable that has exited the cable tensioner) and the squeezed part of the at least two cables. As disclosed above, before overboarding the at least two cables, the at least two cables may be bundled.

Contact pads 20A, 20B are placed at a first distance from one another and cables 2' and 2" are arranged in between. These cables 2', 2" have diameters d₁ and d₂ respectively, which are generally equal, or at least approximately equal. Cables 2', 2" may both be squeezed in between contact pads 20A, 20B as long as the first distance between said pads 20A, 20B is slightly smaller than both of these diameters d₁ and d₂ to be able to exercise some pressure onto the cables 2', 2". Regardless, manufacturing variations and/or deformation occurring during storing and retrieving of the cables may result in unexpected and substantial local variations in these diameters. Unexpected variations in the diameter of either of the two cables inevitably result in an unexpected variation in the difference between the diameters of the two cables.

The presently disclosed system makes it possible to account for these variations while still guiding and tensioning the two or more cables in a synchronous manner with a single cable tensioner, rather than requiring separate contact pads and/or accommodating elements for each cable, such that pressure can be evenly distributed between the two or more cables even when variations in the diameter of the cables (or other elongated bodies) along their length lead to variable differences between the diameters of the two or more cables.

For example, as shown in figure 4, left cable 2' may be slightly larger than right cable 2". In this case, cable 2' pushes against accommodating contact pad 20A slightly harder than right cable 2". If this difference is not accommodated for, the larger of the two cables will push the contact pads 20A, 20B apart, resulting in a reduced contact surface between the at least two elongated bodies and the contact pads. Less contact surface with the smaller of the two cables, in turn, increases the risks of a loss of pulling force on said cable. In the shown embodiment, difference in diameter of the two cables causes base plate 21 and cushion 23A to tilt around the hinge axis of flexible hinge 24 thereby increasing the distance between the contact pads 20A, 20B at the position of the left cable and reducing the distance between the contact pads 20A, 20B at the position of the right cable. Increasing the distance between the contact pads 20A, 20B at the position of the left cable decreases the amount of force with which the left cable pushes against accommodating contact pad 20A. Decreasing the distance between the contact pads 20A, 20B at the position of the right cable increases the amount of force with which the right cable pushes against accommodating contact pad 20A. The above naturally leads to an equilibrium in which the squeeze load is equally distributed between the two cables.

However, the invention is not limited to this manner of accommodating differences in diameter in diameter of cables 2', 2". Flexible hinge 24 may specifically be a polyurethane (PU) hinge or a pinned hinge, and alternatively and/or additionally, one or more springs may be used to couple mounting plate 25 to the second side of base plate 21.

Additionally and/or alternatively, it is also possible to provide an accommodating contact pad 20A by providing a contact pad with a cushion made from a resilient material adapted to locally compress when a sufficiently strong pushing force is effected thereon. In this embodiment, when the larger of the two cables effects such a pushing force, said cushion will locally compress further rather than pushing contact pads 20A, 20B apart. Therefore, at the position of the smaller of the two cables, the distance between contact pads 20A, 20B will stay approximately the same and therefore the squeeze effected on the smaller of the two cables will be maintained.

As shown in figure 5, cables 2', 2" are preferably squeezed in between pads 20A, 20B by being in direct contact with said pads. As also shown in figure 5, specifically, when accommodating contact pad 20A is in a tilted position it is in contact with cables 2', 2" at a point not directly opposing the point of cables 2', 2" at which these are in contact with receiving contact pad 20B. Without further precautions, cables 2', 2" are at risk of, when seen form the direction shown in figure 5, being pushed sideways and/or in a direction transverse to the direction of movement. The smaller of the two cables could be pushes against the larger of the two cables and/or the larger of the two cables could be pushes out from between contact pads 20A and 20B. The sides of elongated recesses 26', 26", or, equivocally, elongated raises arranged substantially parallel to the direction in which cable is received, get in the way of cable moving in this transverse direction.

However, the invention is not limited to this manner of receiving these two cables which are, on the receiving contact pad, positioned next to each other in a direction transverse to the direction of movement. Recesses do not have to extend over the complete depth of receiving contact pad 20B as is shown in figure 7, as a partial recess prevent sideways movements less, but possibly sufficiently well, depending on the exact application.

Furthermore, as can be seen in figures 6 and 7, the exact means with this these contact pads are provided such that they function as accommodating and/or receiving contact pads do not necessarily obstruct each other. In other words, adapting one contact pad for either of these functions is not mutually exclusive to adapting the same contact pad for the other function.

Cushions 23A and/or 23B, as is shown in figures 6 and 7, may be provided with one or more holes 30 distributed over said cushion. Specifically, one or more holes 30 may be provided in a surface of cushions 23A, 23B that is to be in contact with the at least two cables 2', 2". Such holes may prevent the formation of pockets of air, and/or collection of water and dirt between said cushions and the at least two cables 2', 2".

For example, in cable tensioner 10 shown in figures 2 and 3, it may be just first contact pads 20' mounted on upper track 11' or just second contact pads 20" mounted on lower track 11" which are adapted as both accommodating and receiving contact pads.

Furthermore, to achieve the abovementioned technical effects and advantages, not all contact pads 20 in pairs formed between, and/or mounted on tensioner tracks 11 have to be of the earlier discussed types. Some of the first and/or second contact pads 20', 20" may be contact pads known from the art.

For example, an accommodating and/or a receiving contact pad 20A, 20B mounted on upper track 11' can form a pair with a regular contact pad mounted on lower track 11". If upper track 11' is provided with both accommodating and receiving contact pads 20A, 20B, then all of lower track 11" may be provided with regular contact pads.

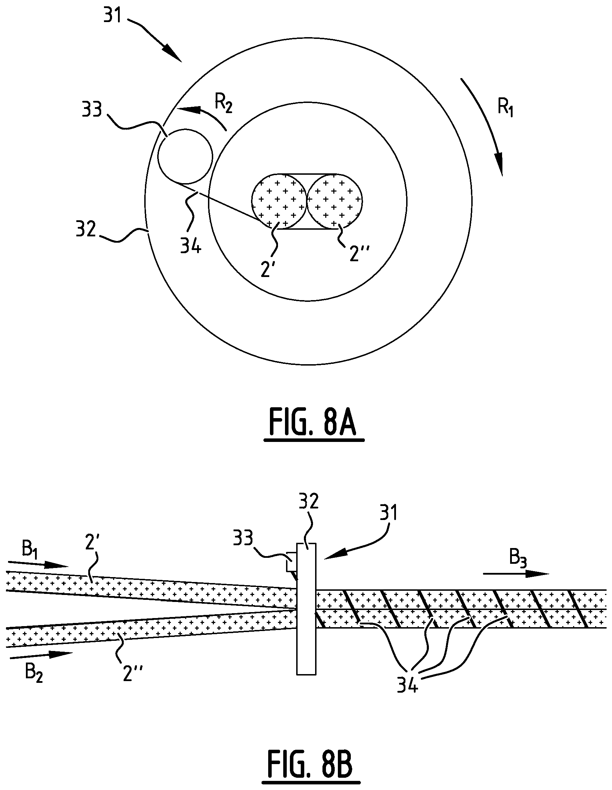

Referring to figures 8A and 8B, one example of bundling means 31 is shown. In this example, cables 2' and 2" are arranged substantially horizontally to each other but mutual arrangement at other angles is also possible. Specifically said, figure 8A shows a rear view and the cables move into the figure, and figure 8B shows a top down view and the cables move from left to right.

Bundling means may comprise a central ring 32 through which the at least two cables 2', 2" pass. Ring 32 is arranged substantially coaxial with cables 2', 2" and configured to rotate, when seen from the side shown in figure 8A, around this axis in the clockwise direction R1. Arranged on ring 32 is at least one spool or bobbin 33. Spool 33 is configured to rotate around its own axis, arranged substantially parallel to, and having a rotational direction opposite to that of ring 32. As such, spool 33 is configured to rotate in the counter-clockwise direction R₂,relative to ring 32. On spool 33 is provided a bundling wire or strap 34, which by a combination of the rotations R₁ and R₂ is unrolled from spool 33.

Bundling means 31 receive the at least two cables 2', 2" from directions B₁ and B₂, respectively. The at least two cables 2', 2" meet at the bundling means. It can be seen from figure 8B that B₁ and B₂ are at an angle of each other, although the skilled person will appreciate that the angle in this figure is not to scale. Minimizing this angle allows for cables 2', 2" to be bundled together with less pulling force from bundling means 31, and consequently with less tension on bundling wire 34. Once bundled into one cable assembly, the at least two cables 2', 2" together move in direction B₃. Synchronisation of the rotational speed of rotations R1, and R2 (for example expressed in the number of turns per unit of time), in combination with the speed at which the at least two cables 2', 2" pass through bundling means 31 (for example expressed in length of cable per unit of time), ensures that bundling wire 34 is wrapped around the cables with some preferred amount of turns per length of cable.

In known installations, before entering bundling means 31, the at least two cables 2', 2" originate from separate cable tensioners, one for each cable. If directed therefrom, towards bundling means 31, directly, the cables will arrive at a substantial mutual angle. Alternatively, known installations are provided with additional guiding means arranged in between the separate cable tensioners, one for each cable, and the bundling means 31. Such additional guiding means (not shown) can be configured to reduce the mutual angle between the at least two cables, but increase the complexity of the overall cable laying system.

When combining bundling means 31 with a cable tensioner 10 according to the invention, the at least two cables 2', 2" can, after exiting cable tensioner 10, be directed towards bundling means 31 directly and will arrive there with a relatively small mutual angle without requiring additional guiding means.

Relying on a cable tensioner 10 according to the invention, for example any of the abovementioned embodiment, in combination with bundling means, for example bundling means 31, a chute, for example chute 3, and a cable storage (not shown), a method for laying a cable assembly can be performed.

Cable storage may comprise one reel on which two or more cables are wound, or may comprise one reel for each cable. Cable tensioner 10 may have to be provided with a first end of both cables 2', 2" so that it can start pulling cable along in a direction of movement. This may be performed by manually retrieving a first end of both cables from storage. Alternatively, when storing the two cables 2', 2" in the cable storage these cables may not be stored completely and the first end of both cables is held by cable tensioner 10. The first step may be retrieving part of all of the at least two cables from storage by pulling, using cable tensioner 10, on the first end one end of the at least two cables. Thereafter, the next step may be bundling the parts of cables removed from storage, downstream of the cable tensioner. Thereafter, the next step may be guiding, using chute 3, the cable assembly overboard.

## Claims

1. Elongated body tensioner (10) configured to pull at least two elongated bodies (2', 2") along in a direction of movement ("M") comprising:
a first track (11') comprising a plurality of first contact pads (20'), arranged in a row in the direction of movement;
a second track (11') comprising a plurality of second contact pads (20"), arranged in a row in the direction of movement;
wherein the first and second track are mutually arranged such that the at least two elongated bodies can be squeezed in between one or more pairs of one first contact pad and one second contact pad;
wherein, in a pair, one of the first and the second contact pad is a receiving contact pad (20B) configured to receive the at least two elongated bodies which are, on the receiving contact pad, positioned next to each other in a direction transverse to the direction of movement; and,
wherein, in a pair, the one, and/or another of the first and the second contact pad is an accommodating contact pad (20A) configured to accommodate a possible difference in diameter of the at least two elongated bodies to avoid reducing contact force between the at least two elongated bodies and the contact pads,
wherein the possible difference in diameter of the at least two elongated bodies is accommodated by providing the accommodating contact pad on its respective track such that it can be tilted around an axis parallel to the direction of movement and/or such that it can be tilted in the transverse direction, to adjust to a difference in diameter of the at least two elongated bodies,
wherein the accommodating contact pad comprises a base plate (21), a cushion (23A) arranged on a first side of the base plate, a mounting element (25) configured to be mounted on the first or second track, and a flexible element (24) via which the mounting element is tiltably attached to a second side of the base plate, opposite to the first side.

2. Elongated body tensioner as claimed in claim 1, wherein a possible difference in diameter of the at least two elongated bodies is accommodated by providing the accommodating contact pad with a contact surface manufactured of a resilient material.

3. Elongated body tensioner as claimed in claim 1 or 2, wherein the flexible element comprises at least one of a hinge, formed by two plates and a flexible material arranged in between the two plates, a pinned hinge, and/or one or more springs.

4. Elongated body tensioner as claimed in any of the preceding claims, wherein the at least two elongated bodies are received next to each other in the transverse direction by providing the receiving contact pad with, for each elongated body, at least one elongated recess (26', 26") extending in the direction of movement.

5. Elongated body tensioner as claimed in any of the preceding claims, wherein, when squeezed in between the one or more pairs of one first and one second contact pads, the at least two elongated bodies extend in the direction of movement.

6. Elongated body tensioner as claimed in any of the preceding claims, wherein the direction of movement is substantially horizontal and wherein the first track is an upper track and wherein the second track is a lower track.

7. Elongated body tensioner as claimed in any of the preceding claims, comprising a plurality of receiving contact pads which are preferably all mounted on the same track.

8. Elongated body tensioner as claimed in claims 6 and 7, wherein all receiving contact pads are mounted on the lower track, and are, when forming part of a pair of contact pads squeezing the at least two elongated bodies in between, are preferably facing upward.

9. Elongated body tensioner as claimed in any of the preceding claims, comprising a plurality of accommodating contact pads which are preferably all mounted on the same track.

10. Elongated body tensioner as claimed in claims 6 and 9, wherein all accommodating contact pads are mounted on the upper track, and, when forming part of a pair of contact pads squeezing the at least two elongated bodies in between, are preferably facing downward.

11. Tensioning system for laying an elongated body assembly of at least two elongated bodies (2', 2''), comprising:
storage configured to have the at least two elongated bodies stored therein;
one or more elongated body tensioners (10) according to any one of the claims 1-10, wherein each elongated body tensioner is configured to pull on one end of the at least two elongated bodies to remove part of the at least two elongated bodies from storage;
means (31) configured to bundle the parts of elongated body removed from storage positioned in an assembly, downstream of the elongated body tensioner;
a chute (3), configured to guide the elongated body assembly overboard.

12. Elongated body laying vessel (1), provided with a tensioning system as claimed in claim 11.

13. Method for laying an elongated body assembly of at least two elongated bodies (2', 2'') from an elongated body laying vessel (1), preferably the elongated body laying vessel (1) of claim 12, the method comprising:
storing, in a storage, the at least two elongated bodies;
retrieving part of all of the at least two elongated bodies from storage by pulling, using an elongated body tensioner (10) according to any one of the claims 1-10, on one end of the at least two elongated bodies;
bundling the parts of elongated body removed from storage in an assembly, downstream of the elongated body tensioner;
guiding, using a chute (3), the elongated body assembly overboard.

## Patentansprüche

1. Spannvorrichtung (10) für längliche Körper, die konfiguriert ist, um mindestens zwei längliche Körper (2', 2") in einer Bewegungsrichtung ("M") entlang zu ziehen, umfassend:
eine erste Bahn (11'), umfassend eine Vielzahl von ersten Kontaktpads (20'), die in einer Reihe in der Bewegungsrichtung angeordnet sind;
eine zweite Bahn (11'), umfassend eine Vielzahl von zweiten Kontaktpads (20"), die in einer Reihe in der Bewegungsrichtung angeordnet sind;
wobei die erste und die zweite Bahn derart zueinander angeordnet sind, dass die mindestens zwei länglichen Körper zwischen einem oder mehreren Paaren von einem ersten Kontaktpad und einem zweiten Kontaktpad eingeklemmt werden können;
wobei in einem Paar eines des ersten und des zweiten Kontaktpads ein Empfangskontaktpad (20B) ist, das konfiguriert ist, um die mindestens zwei länglichen Körper zu empfangen, die auf dem Empfangskontaktpad in einer Richtung quer zu der Bewegungsrichtung nebeneinander positioniert sind; und
wobei in einem Paar das eine und/oder das andere des ersten und des zweiten Kontaktpads ein Aufnahmekontaktpad (20A) ist, das konfiguriert ist, um einen möglichen Unterschied im Durchmesser der mindestens zwei länglichen Körper unterzubringen, um ein Reduzieren der Kontaktkraft zwischen den mindestens zwei länglichen Körpern und den Kontaktpads zu vermeiden,
wobei dem möglichen Unterschied im Durchmesser der mindestens zwei länglichen Körper Rechnung getragen wird, durch Bereitstellen des Aufnahmekontaktpads auf seiner jeweiligen Bahn derart, dass es um eine Achse parallel zu der Bewegungsrichtung gekippt werden kann und/oder derart, dass es in die Querrichtung gekippt werden kann, um einen Unterschied im Durchmesser der mindestens zwei länglichen Körper auszugleichen,
wobei das Aufnahmekontaktpad eine Grundplatte (21), ein Kissen (23A), das auf einer ersten Seite der Grundplatte angeordnet ist, ein Montageelement (25), das konfiguriert ist, um auf der ersten oder der zweiten Bahn montiert zu werden, und ein flexibles Element (24), über dem das Montageelement an einer zweiten Seite der Grundplatte, gegenüber der ersten Seite kippbar, angebracht ist, umfasst.

2. Spannvorrichtung für längliche Körper nach Anspruch 1, wobei einem möglichen Unterschied im Durchmesser der mindestens zwei länglichen Körper Rechnung getragen wird, durch Versehen des Aufnahmekontaktpads mit einer Kontaktoberfläche, die aus einem elastischen Material gefertigt ist.

3. Spannvorrichtung für längliche Körper nach Anspruch 1 oder 2, wobei das flexible Element mindestens eines von einem Scharnier, das durch zwei Platten und einem flexiblen Material, das zwischen den zwei Platten angeordnet ist, ausgebildet ist, einem Stiftscharnier und/oder einer oder mehreren Federn umfasst.

4. Spannvorrichtung für längliche Körper nach einem der vorstehenden Ansprüche, wobei die mindestens zwei länglichen Körper in Querrichtung nebeneinander empfangen werden, durch Bereitstellen des Empfangskontaktpads für jeden länglichen Körper mit mindestens einer länglichen Aussparung (26', 26"), die sich in der Bewegungsrichtung erstreckt.

5. Spannvorrichtung für längliche Körper nach einem der vorstehenden Ansprüche, wobei, wenn sie zwischen dem einen oder den mehreren Paaren von einem ersten und einem zweiten Kontaktpad eingeklemmt sind, sich die mindestens zwei länglichen Körper in der Bewegungsrichtung erstrecken.

6. Spannvorrichtung für längliche Körper nach einem der vorstehenden Ansprüche, wobei die Bewegungsrichtung im Wesentlichen horizontal ist und wobei die erste Bahn eine obere Bahn und die zweite Bahn eine untere Bahn ist.

7. Spannvorrichtung für längliche Körper nach einem der vorstehenden Ansprüche, umfassend eine Vielzahl von Empfangskontaktpads, die vorzugsweise alle auf derselben Bahn montiert sind.

8. Spannvorrichtung für längliche Körper nach Anspruch 6 und 7, wobei alle Empfangskontaktpads auf der unteren Bahn montiert sind und, wenn sie Teil eines Paars von Kontaktpads ausbilden, die die mindestens zwei länglichen Körper dazwischen einklemmen, vorzugsweise nach oben zeigen.

9. Spannvorrichtung für längliche Körper nach einem der vorstehenden Ansprüche, umfassend eine Vielzahl von Aufnahmekontaktpads, die vorzugsweise alle auf derselben Bahn montiert sind.

10. Spannvorrichtung für längliche Körper nach Anspruch 6 und 9, wobei alle Aufnahmekontaktpads auf der oberen Bahn montiert sind und, wenn sie Teil eines Paars von Kontaktpads ausbilden, die die mindestens zwei länglichen Körper dazwischen einklemmen, vorzugsweise nach unten weisen.

11. Spannsystem zum Verlegen einer Baugruppe länglicher Körper aus mindestens zwei länglichen Körpern (2', 2"), umfassend:
ein Lager, das konfiguriert ist, um die mindestens zwei länglichen Körper darin zu lagern;
eine oder mehrere Spannvorrichtungen (10) für längliche Körper nach einem der Ansprüche 1 bis 10, wobei jede Spannvorrichtung für längliche Körper konfiguriert ist, um an einem Ende der mindestens zwei länglichen Körper zu ziehen, um einen Teil der mindestens zwei länglichen Körper aus dem Lager zu entnehmen;
Mittel (31), die konfiguriert sind, um die Teile eines länglichen Körpers zu bündeln, die aus einem Lager entnommen werden, die in einer Baugruppe positioniert sind, stromabwärts von der Spannvorrichtung für längliche Körper;
eine Rutsche (3), die konfiguriert ist, um die Baugruppe länglicher Körper über Bord zu leiten.

12. Verlegefahrzeug (1) für längliche Körper, das mit einem Spannsystem nach Anspruch 11 versehen ist.

13. Verfahren zum Verlegen einer Baugruppe länglicher Körper aus mindestens zwei länglichen Körpern (2', 2") von einem Verlegefahrzeug (1) für längliche Körper, vorzugsweise dem Verlegefahrzeug (1) für längliche Körper nach Anspruch 12, das Verfahren umfassend:
Lagern, in einem Lager, der mindestens zwei länglichen Körper;
Zurückholen eines Teils oder aller der mindestens zwei länglichen Körper aus dem Lager durch Ziehen, unter Verwendung einer Spannvorrichtung (10) für längliche Körper nach einem der Ansprüche 1 bis 10, an einem Ende der mindestens zwei länglichen Körper;
Bündeln der Teile eines länglichen Körpers, die aus einem Lager in einer Baugruppe entnommen werden, stromabwärts von der Spannvorrichtung für längliche Körper;
Leiten, unter Verwendung einer Rutsche (3), der Baugruppe länglicher Körper über Bord.

## Revendications

1. Tendeur de corps allongé (10) conçu pour tirer au moins deux corps allongés (2', 2") le long d'une direction de mouvement (« M ») comprenant :
une première piste (11') comprenant une pluralité de premiers plots de contact (20'), agencés dans une rangée dans la direction de mouvement ;
une seconde piste (11') comprenant une pluralité de seconds plots de contact (20"), agencés dans une rangée dans la direction de mouvement ;
dans lequel la première et la seconde piste sont mutuellement agencées de telle sorte que les au moins deux corps allongés peuvent être pressés entre une ou plusieurs paires d'un premier plot de contact et d'un second plot de contact ;
dans lequel, dans une paire, l'un du premier et du second plot de contact est un plot de contact de réception (20B) conçu pour recevoir les au moins deux corps allongés qui sont, sur le plot de contact de réception, positionnés l'un à côté de l'autre dans une direction transversale à la direction de mouvement ; et,
dans lequel, dans une paire, l'un, et/ou l'autre du premier et du second plot de contact est un plot de contact de compensation (20A) conçu pour compenser une possible différence de diamètre des au moins deux corps allongés pour éviter de réduire une force de contact entre les au moins deux corps allongés et les plots de contact,
dans lequel la possible différence de diamètre des au moins deux corps allongés est compensée en fournissant le plot de contact de compensation sur sa piste respective de telle sorte qu'il peut être incliné autour d'un axe parallèle à la direction de mouvement et/ou de telle sorte qu'il peut être incliné dans la direction transversale, pour s'ajuster à une différence de diamètre des au moins deux corps allongés,
dans lequel le plot de contact de compensation comprend une plaque de base (21), un coussin (23A) agencé sur un premier côté de la plaque de base, un élément de montage (25) conçu pour être monté sur la première ou la seconde piste, et un élément flexible (24) par l'intermédiaire duquel l'élément de montage est fixé de manière inclinable à un second côté de la plaque de base, opposé au premier côté.

2. Tendeur de corps allongé selon la revendication 1, dans lequel une possible différence de diamètre des au moins deux corps allongés est compensée en fournissant au plot de contact de compensation une surface de contact fabriquée d'un matériau élastique.

3. Tendeur de corps allongé selon la revendication 1 ou 2, dans lequel l'élément flexible comprend au moins l'un d'une charnière, formée par deux plaques et un matériau flexible agencé entre les deux plaques, d'une charnière à broches, et/ou d'un ou plusieurs ressorts.

4. Tendeur de corps allongé selon l'une quelconque des revendications précédentes, dans lequel les au moins deux corps allongés sont reçus l'un à côté de l'autre dans la direction transversale en fournissant au plot de contact de réception, pour chaque corps allongé, au moins un évidement allongé (26', 26") s'étendant dans la direction de mouvement.

5. Tendeur de corps allongé selon l'une quelconque des revendications précédentes, dans lequel, lorsqu'ils sont pressés entre les une ou plusieurs paires d'un premier et d'un second plots de contact, les au moins deux corps allongés s'étendent dans la direction de mouvement.

6. Tendeur de corps allongé selon l'une quelconque des revendications précédentes, dans lequel la direction de mouvement est sensiblement horizontale et dans lequel la première piste est une piste supérieure et dans lequel la seconde piste est une piste inférieure.

7. Tendeur de corps allongé selon l'une quelconque des revendications précédentes, comprenant une pluralité de plots de contact de réception qui sont de préférence tous montés sur la même piste.

8. Tendeur de corps allongé selon les revendications 6 et 7, dans lequel tous les plots de contact de réception sont montés sur la piste inférieure, et sont, lorsqu'ils font partie d'une paire de plots de contact pressant les au moins deux corps allongés entre eux, font de préférence face vers le haut.

9. Tendeur de corps allongé selon l'une quelconque des revendications précédentes, comprenant une pluralité de plots de contact de compensation qui sont de préférence tous montés sur la même piste.

10. Tendeur de corps allongé selon les revendications 6 et 9, dans lequel tous les plots de contact de compensation sont montés sur la piste supérieure et, lorsqu'ils font partie d'une paire de plots de contact pressant les au moins deux corps allongés entre eux, font de préférence face vers le bas.

11. Système de tension pour la pose d'un ensemble de corps allongés composé d'au moins deux corps allongés (2', 2"), comprenant :
un stockage conçu pour contenir les au moins deux corps allongés à l'intérieur de celui-ci ;
un ou plusieurs tendeurs de corps allongés (10) selon l'une quelconque des revendications 1 à 10, dans lequel chaque tendeur de corps allongé est conçu pour tirer sur une extrémité des au moins deux corps allongés pour retirer une partie des au moins deux corps allongés du stockage ;
un moyen (31) conçu pour regrouper les parties de corps allongé retirées du stockage positionnées dans un ensemble, en aval du tendeur de corps allongé ;
une goulotte (3), conçue pour guider l'ensemble de corps allongé par-dessus bord.

12. Navire de pose de corps allongés (1), muni d'un système de tension selon la revendication 11.

13. Procédé de pose d'un ensemble de corps allongés d'au moins deux corps allongés (2', 2") à partir d'un navire de pose de corps allongés (1), de préférence le navire de pose de corps allongés (1) selon la revendication 12, le procédé comprenant :
le stockage, dans un stockage, des au moins deux corps allongés ;
la récupération d'une partie ou de la totalité des au moins deux corps allongés du stockage en tirant, à l'aide d'un tendeur de corps allongé (10) selon l'une quelconque des revendications 1 à 10, sur une extrémité des au moins deux corps allongés ;
le regroupement des parties de corps allongé retirées du stockage dans un ensemble, en aval du tendeur de corps allongé ;
le guidage, à l'aide d'une goulotte (3), du corps allongé par-dessus bord.
